# EUROPÄISCHE PATENTSCHRIFT

(11) **EP 4 140 023 B1**
(45) Veröffentlichungstag und Bekanntmachung des Hinweises auf die Patenterteilung: **19.08.2026**
(21) Anmeldenummer: 21728456.1
(22) Anmeldetag: 12.05.2021
(51) Int. Cl.: H02K 15/023

(54) **VERFAHREN ZUR HERSTELLUNG EINES ROTORS EINER ASYNCHRONMASCHINE**
METHOD FOR PRODUCING A ROTOR OF AN ASYNCHRONOUS ENGINE
PROCÉDÉ DE FABRICATION D'UN ROTOR D'UNE MACHINE ASYNCHRONE

(30) Priorität: 14.07.2020 EP 20185753
(43) Veröffentlichungstag der Anmeldung: 01.03.2023
(73) Patentinhaber: Innomotics GmbH, 90441 Nürnberg (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(74) Vertreter: Michalski Hüttermann & Partner mbB
(86) Internationale Anmeldenummer: PCT/EP2021/062591
(87) Internationale Veröffentlichungsnummer: WO 2022/012801

(56) Entgegenhaltungen:
- US-A1- 2016 197 539

## Beschreibung

Die Erfindung betrifft ein Verfahren zur Herstellung eines Rotors einer Asynchronmaschine mit folgenden Schritten, bereitstellen eines Rotorblechpakets mit parallel zu einer Rotorachse des Rotors verlaufenden Nuten, einsetzen von Leiterstäben in die Nuten derart, dass die Leiterstäbe aus den Stirnseiten des Rotorblechpakets ragen.

Kurzschlussläufer dynamoelektrischer rotatorischer Maschinen werden im niedrigeren Leistungsbereich in Druckgusstechnik in einem Arbeitsgang hergestellt. Dieses stoffschlüssige Verfahren ist kostenintensiv, da die Druckgussformen teuer sind und vergleichsweise schnell verschleißen. Des Weiteren ist bei der Herstellung ein vergleichsweise hohes Maß an Streuung in der Qualität eines derartig hergestellten Kurzschlussläufers vorhanden. Dies äußert sich beispielsweise in der Veränderung der Qualität der Schmelze im Tiegel, durch Verunreinigungen der Schmelze während des Gießprozesses, durch Trennmittel bzw. Abrasion am Werkzeug, ebenso wie durch Lunkerbildung oder Spannungsrissbildung bei Abkühlung des Druckgusses.

Im höheren Leistungsbereich oder bei Sonderanwendungen dynamoelektrischer rotatorischer Maschinen, werden einzelne Leiterstäbe mit einem Kurzschlussring elektrisch und mechanisch verbunden. Dies geschieht beispielsweise durch Löt- oder Schweißvorgänge, wie dies der DE 34 13 519 C2 zu entnehmen ist.

Nachteilig dabei ist jedoch, dass bei diesen größeren dynamoelektrischen Maschinen Kurzschlussringe vorhanden sind, die eine umlaufende Lötwanne aufweisen, die beim Lötprozess komplett mit Lot zu füllen ist.

Dabei wird lediglich das Volumen, des in der Lötwanne ragenden Volumen der Läuferstäbe nicht mit Lot gefüllt. Aufgrund des hohen Silberanteils im Lot ist dabei unter anderem eine Herstellung der Lötverbindung zwischen Läuferstäben und Kurzschlussring wirtschaftlich nicht besonders sinnvoll.

Um die, auch bei niedrigen Leistungsbereich auftretenden Qualitätsverluste zu beheben, wird beispielsweise unter Schutzgaseinfluss der Druckgussvorgang durchführt. Ebenso werden Werkzeuge mit mehreren Entlüftungsmöglichkeiten vorgesehen, oder es wird sogar ein Nachlegieren der Schmelze durchgeführt.

Diese Eingriffe ermöglichen die Steigerung der Effizienz des Asynchronkäfigläufers, jedoch sind zur Festigkeit zusätzliche Maßnahmen notwendig, die insbesondere eine hohe Drehzahltauglichkeit beinhalten, wie z.B. Stützringe oder Einsatz von Legierungen um höhere Festigkeitswerte zu erhalten.

Die EP 3 402 507 A1 schlägt ein Verfahren zur Herstellung eines Kurzschlussläufers einer Asynchronmaschine mit folgenden Schritten vor:
- Bereitstellen eines Rotorblechpakets mit im Wesentlichen axial verlaufenden Nuten,
- Einsetzen von Leiterstäben in die Nuten derart, dass die Leiterstäbe aus den Stirnseiten des Rotorblechpakets ragen und verpressen mit Kurzschlussringscheiben.

Die US 2016/0197539 A1 schlägt vor das Rotorblechpaket durch eine axiale Haltekraft vorzuspannen und erst danach eine Abwicklung der herausragenden Stäbe vorzunehmen. Dadurch wird ein Komprimieren des Pakets erreicht, wobei gleichzeitig durch das Abwinkeln eine Sperrkraft erzeugt wird.

Es ist eine Aufgabe der vorliegenden Erfindung, geschrägte Rotoren herzustellen ohne auf Verfahren, wie Druckgießen, Schweißen oder Löten zurückgreifen zu müssen.

Die Aufgabe wird für das eingangs genannte Verfahren zur Herstellung eines Rotors dadurch gelöst, dass aufbauend auf den beschriebenen Schritten in anschließenden Schritten durch die Merkmale des Anspruchs 1 ausgeführt werden.

Erfindungsgemäß ist vorgesehen, dass das Bereitstellen eines Rotorpaketes das lose Auffädeln von Rotorblechen an dem Rotorblechpaket beinhaltet und das Verdrehen eine kraftschlüssige Verbindung zwischen dem Rotorblechpaket und den Leiterstäben entsteht.

Durch das eingesetzte Verdreh-Werkzeug ist es möglich, dass die herausragenden Leiterstäbe nicht abgewinkelt werden, sondern gerade bleiben. Von Vorteil ist es, dass jetzt im Anschluss vorgefertigte Kurzschlussringe durch ein gerades Aufpressen aufgebracht werden können.

In der Asynchrontechnik werden die Rotorpakete mit ihren Leiterstäben zur Bildung eines Kurzschlusskäfiges zur Reduzierung einer Drehmomentwelligkeit und Verbesserung eines Anlaufverhaltens überwiegend schräg ausgeführt. Eine Verdrehung einer Nut im Rotor entspricht im Wesentlichen dem Winkelabstand einer Statornut. Mit dem erfindungsgemäßen Verfahren kann man auf einfacher Weise Läuferstäbe als einfach geschränkte oder doppelgeschränkte Käfige aufbauen. Käfige mit doppelgeschränkten Läuferstäben nennt man auch Staffelläufer. Durch das Schränken der Läuferstäbe erzielt man günstigere Anlaufbedingungen, so werden hierdurch beispielsweise ein Nutenpfeiffen, ein inhomogenes Drehmoment, magnetische Wirbelungen, Rüttelkräfte und Bremsungen vermindert.

Als ein weiterer entscheidender Vorteil für das erfindungsgemäße Verfahren wird angesehen, dass man hier auf Verfahren wie Druckgießen oder Löten oder Schweißen verzichten kann und den Rotor in einer automatisierten Fertigung fertigen lassen kann. Die eingelegten Leiterstäbe werden dann beispielsweise in einer Verdrehmaschine mit einer programmierten Biegelinie schraubenförmig mit dem Rotorpaket verdreht, so dass eine Festigkeit ohne Schweißen und Löten entsteht. Zuvor mussten verdreht-paketierte Rotorpakete mit Aluminium- oder Kupferschmelze ausgegossen werden, welches zu umständlich ist und einem automatisierten Fertigungsverfahren entgegensteht.

Ein weiterer Vorteil ist, dass die Kurzschlussringe auf ein gerade paketiertes Paket aufgepresst werden, somit kein Abknicken der Leiterstäbe erfolgt und erst im Anschluss werden die beiden außenliegenden Kurzschlussringscheiben gegeneinander verdreht und dadurch wird die Schrägung erzeugt und auch die kraftschlüssige Verbindung zwischen dem Rotorblechpaket und den Leiterstäben.

Vorteilhafterweise wird als ein Material für die Leiterstäbe und der Kurzschlussringscheiben vorzugsweise Aluminium, Kupfer oder Aluminium- oder Kupferlegierung verwendet.

Für das Aufpressen bzw. Einpressen des Kurzschlussringscheiben ist es von Vorteil, wenn die Kurzschlussringscheiben über die Rekristallisationstemperatur erwärmt ist bzw. sind, und das axiale Einpressen zumindest einer Kurzschlussringscheibe auf die aus der Stirnseite des Rotorblechpakets ragenden Leiterstäben unter Berücksichtigung eines Temperaturbereiches, einer Formänderung sowie einer Formänderungsgeschwindigkeit mit anschließendem oder gleichzeitigen Warmumformen der axial aufgeschobenen Kurzschlussringscheiben erfolgt. Als ein vorteilhafter Temperaturbereich hat sich für die Kurzschlussringscheiben herausgestellt, dass dies bei 400 - 500 °Celsius erfolgen sollte. Die Formänderung sollte im Bereich von 0,5 und die Formänderungsgeschwindigkeit sollte im Bereich von 1 bis 4 pro Sekunde liegen.

Die Erfindung wird anhand eines Ausführungsbeispiels näher erläutert. Es zeigen die FIG 1 einen prinzipiellen Längsschnitt einer Asynchronmaschine nach dem Stand der Technik, die FIG 2 die Verfahrensschritte von links nach rechts mit dem Verdreh-Werkzeug und die FIG 3 das Aufpressen der Kurzschlussringscheiben.

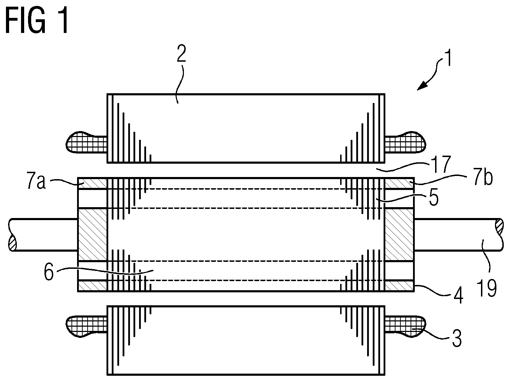

FIG 1 zeigt einen prinzipiellen Längsschnitt einer Asynchronmaschine 1 mit einem Stator 2, der an seinen Stirnseiten ein Wicklungssystem 3 ausbildet, welches dort wiederum Wickelköpfe ausbildet. Das Wicklungssystem 3 kann dabei beispielsweise aus gezehnten Spulen, Formspulen, Zahnspulen unterschiedlicher oder gleicher Spulenweite aufgebaut sein.

Über einen Luftspalt 17 der Asynchronmaschine 1 ist der Rotor 4 vom Stator 2 beabstandet. Der Rotor 4 weist ein Rotorblechpaket 5 auf. An den Stirnseiten 15a,15b des Rotorblechpaketes 5 ist jeweils eine erste Kurzschlussringscheibe 7a und eine zweite Kurzschlussringscheibe 7b angeordnet. Der Rotor 4 läuft auf einer Welle 19.

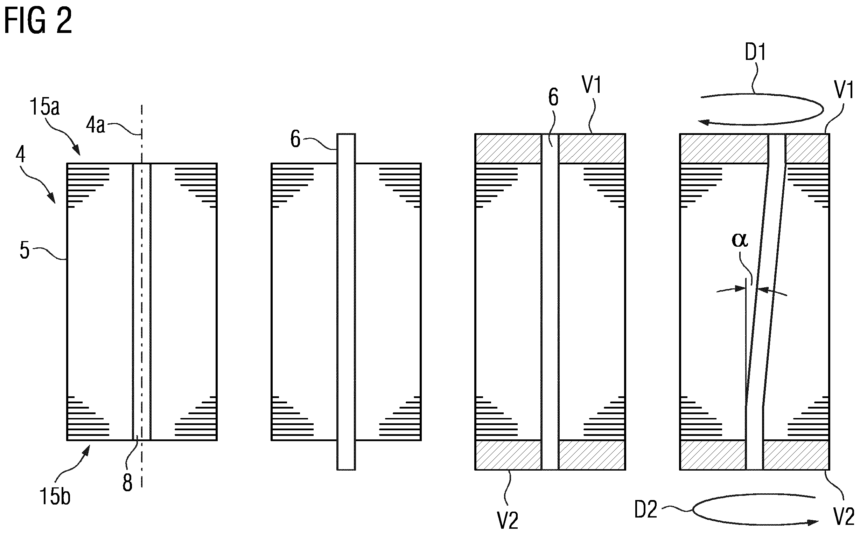

Gemäß der FIG 2 werden die erfindungsgemäßen Verfahrensschritte erläutert. Die Verfahrensschritte verlaufen von links nach rechts. Zuerst wird das Rotorblechpaket 5 mit parallel zu einer Rotorachse 4a des Rotors 4 verlaufenden Nuten 8 bereitgestellt. Das Bereitstellen kann insbesondere durch ein loses Auffädeln von einzelnen Rotorblechen zu dem Rotorblechpaket 5 erfolgen. In einem nächsten Schritt werden Leiterstäbe 6 in die Nuten 8 eingesetzt. Anmerkung zur vereinfachten Darstellung, hier ist nur eine Nut 8 in den Zeichnungen abgebildet, aber es wird zumindest eine zweite Nut auf der gegenüberliegenden Seite vorhanden sein.

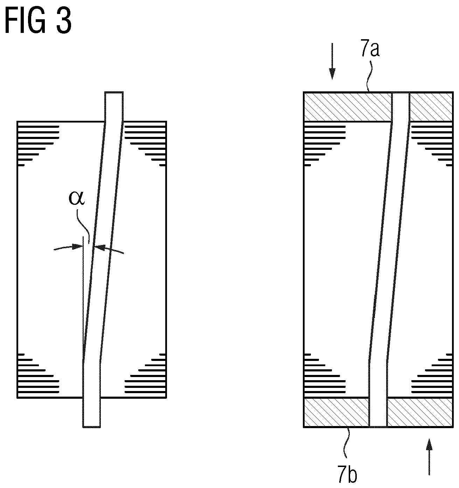

In einem weiteren Schritt wird ein erstes und zweites Verdreh-Werkzeug V1,V2 bereitgestellt und axial wird das erste und das zweite Verdreh-Werkzeug V1,V2 auf die aus den Stirnseiten 15a,15b des Rotorblechpaketes 5 ragenden Leiterstäbe 6 aufgesetzt. In einem anschließenden Schritt wird das erste Verdreh-Werkzeug V1 gegenüber dem zweiten Verdreh-Werkzeug V2 durch entgegengesetzt gerichtete Drehmomente D1,D2, um einen vorgebbaren Winkel α verdreht, wobei die parallel verlaufenden Nuten 8 mit dem jeweils darin angeordneten Leiterstäben 6 nach Beendigung der Verdrehung nun zusätzlich schräg verlaufen. Weiterhin beinhaltet das Verdrehen eine kraftschlüssige Verbindung zwischen dem Rotorblechpaket 5 und den Leiterstäben 6. Das axiale Einpressen der Kurzschlussringscheiben 7a,7b geschieht unter Berücksichtigung eines idealen Temperaturbereiches zur Formänderung sowie der optimalen Formänderungsgeschwindigkeit ist in FIG 3 gezeigt. Eine plastische Verformung findet dabei durch Versetzungswanderung der Atomebenen im Gitter statt. Diese Wanderung und somit das Überwinden von Hindernissen im Atomgitter (wie z.B. Stufenversetzung, Fremdatome etc.) wird durch eine Temperaturerhöhung begünstigt. So steigt ab einer bestimmten materialabhängigen Temperaturgrenze das Formänderungsvermögen an. Die Umformgeschwindigkeit, die Temperatur und die Fließgeschwindigkeit des jeweiligen Materials sind somit aufeinander abzustimmen.

Dabei bildet sich zwischen dem Material der Kurzschlussringscheiben 7a,7b und den Leiterstäben 6 eine Mikroverschweißung. Diese Mikroverschweißung entsteht dadurch, dass der Leiterstab 6 und die Kurzschlussringscheiben 7a,7b fest aufeinander reiben und somit eine Flächenpressung und zusätzliche Reibungswärme generieren. Dabei werden die zulässigen Scherspannung dieser Materialien lokal überschritten und es werden Stoffübergänge durch Diffusion an der Grenzfläche zwischen dem Leiterstab 6 und der Kurzschlussringscheibe 7a,7b verursacht. Die Folge davon sind Aufschweißungen im Mikrobereich sowie Mikroverschweißungen.

In einem anschließenden Schritt wird das erste Verdreh-Werkzeug V1 gegenüber dem zweiten Verdreh-Werkzeug V2 durch entgegengesetzt gerichtete Drehmomente D1,D2, um einen vorgebbaren Winkel α verdreht, wobei die parallel verlaufenden Nuten 8 mit dem jeweils darin angeordneten Leiterstäben 6 nach Beendigung der Verdrehung nun zusätzlich schräg verlaufen. Weiterhin beinhaltet das Verdrehen eine kraftschlüssige Verbindung zwischen dem Rotorblechpaket 5 und den Leiterstäben 6.

## Patentansprüche

1. Verfahren zur Herstellung eines Rotors (4) einer Asynchronmaschine (1) mit folgenden Schritten,
- Bereitstellen eines Rotorblechpakets (5) mit parallel zu einer Rotorachse (4a) des Rotors (4) verlaufenden Nuten (8),
- Einsetzen von Leiterstäben (6) in die Nuten (8) derart, dass die Leiterstäbe (6) aus den Stirnseiten (15a,15b) des Rotorblechpakets (5) ragen,
**dadurch gekennzeichent,**
- dass jeweils ein Verdreh-Werkzeug (V1,V2) auf die aus den Stirnseiten (15a,15b) herausragenden Leiterstäbe (6) gesetzt wird,
- das die Verdreh-Werkzeuge (V1,V2) gegeneinander verdreht werden,
wobei die parallel verlaufenden Nuten (8) mit den jeweiligen Leiterstäben (6) nach Beendigung der Verdrehung nun zusätzlich schräg verlaufen, wobei die Verdreh-Werkzeuge (V1,V2) derart ausgestaltet sind, dass die herausragenden Leiterstäbe (6) bei der Herstellung einer Paketschrägung parallel zu der Rotorachse (4a) stehen bleiben,
- Entfernen der Verdreh-Werkzeuge (V1,V2),
- Bereitstellen einer ersten und zweiten Kurzschlussringscheibe (7a,7b),
- axiales Einpressen der ersten und zweiten Kurzschlussringscheibe (7a,7b) auf die aus der Stirnseite (15a,15b) des Rotorblechpakets (5) senkrecht ragenden Leiterstäbe (6),
wobei das Bereitstellen des Rotorblechpakets (5) das lose Auffädeln von Rotorblechen zu dem Rotorblechpaket (5) beinhaltet und durch das Verdrehen eine kraftschlüssige Verbindung zwischen dem Rotorblechpaket (5) und den Leiterstäben (6) entsteht.

2. Verfahren nach Anspruch 1, wobei ein axiales Verspannen durch Aufpressen der Kurzschlussringscheiben (7a,7b) erreicht wird.

3. Verfahren nach einem der Ansprüche 1 bis 2, wobei als ein Material der Leiterstäbe (6) und der Kurzschlussringscheiben(7a,7b) vorzugsweise Aluminium, Kupfer oder eine Aluminium- oder Kupferlegierung verwendet wird.

4. Verfahren nach Anspruch 3, wobei zumindest das Material der Kurzschlussringscheiben (7a,7b) über die Rekristallisationstemperatur erwärmt ist, und das axiale Einpressen zumindest einer Kurzschlussringscheibe (7) auf die aus der Stirnseite (15a,15b) des Rotorblechpakets (5) ragenden Leiterstäben (6) unter Berücksichtigung eines Temperaturbereichs, einer Formänderung sowie einer Formänderungsgeschwindigkeit mit anschließendem oder gleichzeitigem Warmumformen der axial aufgeschobenen Kurzschlussringscheiben (7a,7b) durchgeführt wird.

## Claims

1. A method for manufacturing a rotor (4) of an asynchronous machine (1) with the following steps,
- providing a rotor lamination stack (5) having slots (8) running parallel to a rotor axis (4a) of the rotor (4),
- inserting conductor bars (6) into the slots (8), such that the conductor bars (6) project from the end faces (15a,15b) of the rotor lamination stack (5),
**characterized in that**
- a twisting tool (V1,V2) is placed on the conductor bars (6) projecting from the end faces (15a,15b),
- the twisting tools (V1,V2) are twisted relative to each other, wherein the parallel-running slots (8) with the respective conductor bars (6) now additionally run obliquely after completion of the twist, wherein the twisting tools (V1,V2) are configured such that the projecting conductor bars (6) remain parallel to the rotor axis (4a) during the production of a skewed stack,
- removing the twisting tools (V1,V2),
- providing first and second short-circuit ring disks (7a, 7b),
- axially press-fitting the first and second short-circuit ring disks (7a,7b) onto the conductor bars (6) projecting perpendicularly from the end faces (15a,15b) of the rotor lamination stack (5),
wherein providing the rotor lamination stack (5) includes loosely threading rotor laminations to form the rotor lamination stack (5), and twisting produces a frictional connection between the rotor lamination stack (5) and the conductor bars (6).

2. A method according to claim 1, wherein axial clamping is achieved by press-fitting the short-circuit ring disks (7a,7b).

3. The method according to any one of claims 1 to 2, wherein aluminum, copper, or an aluminum or copper alloy is preferably used as a material for the conductor bars (6) and the short-circuit ring disks (7a, 7b).

4. The method according to claim 3, wherein at least the material of the short-circuit ring disks (7a,7b) is heated above the recrystallization temperature, and the axial press-fitting of at least one short-circuit ring disk (7) onto the conductor bars (6) projecting from the end faces (15a,15b) of the rotor lamination stack (5) is carried out taking into account a temperature range, a deformation, and a deformation rate, with subsequent or simultaneous hot forming of the axially pushed-on short-circuit ring disks (7a,7b).

## Revendications

1. Procédé de fabrication d'un rotor (4) d'une machine asynchrone (1) comprenant les étapes suivantes :
- Mise à disposition d'un paquet de tôles de rotor (5) avec des rainures (8) parallèles à un axe de rotor (4a) du rotor (4),
- Insertion de barres conductrices (6) dans les rainures (8) de manière à ce que les barres conductrices (6) dépassent des faces frontales (15a, 15b) du paquet de tôles du rotor (5),
**caractérisé en ce que**
- un outil de torsion (V1, V2) est placé sur chacune des barres conductrices (6) dépassant des faces frontales (15a, 15b),
- les outils de torsion (V1, V2) sont tordus l'un par rapport à l'autre, les rainures parallèles (8) avec les barres conductrices respectives (6) étant maintenant également inclinées une fois la torsion terminée, les outils de torsion (V1, V2) étant conçus de telle sorte que les barres conductrices saillantes (6) restent parallèles à l'axe du rotor (4a) lors de la réalisation d'une inclinaison de paquet,
- retrait des outils de torsion (V1, V2),
- mise à disposition d'un premier et d'un deuxième disque d'anneau de court-circuit (7a, 7b),
- emmanchement axial du premier et du deuxième disque d'anneau de court-circuit (7a, 7b) sur les barres conductrices (6) faisant saillie perpendiculairement à partir de la face frontale (15a, 15b) de l'empilage de tôles de rotor (5),
la mise à disposition de l'empilage de tôles de rotor (5) comprenant l'enfilage libre des tôles de rotor sur l'empilage de tôles de rotor (5) et la torsion créant une liaison par adhérence entre l'empilage de tôles de rotor (5) et les barres conductrices (6).

2. Procédé selon la revendication 1, dans lequel un serrage axial est obtenu par pressage des disques d'anneau de court-circuit (7a, 7b).

3. Procédé selon l'une des revendications 1 à 2, dans lequel on utilise de préférence de l'aluminium, du cuivre ou un alliage d'aluminium ou de cuivre comme matériau pour les barres conductrices (6) et les disques d'anneau de court-circuit (7a, 7b).

4. Procédé selon la revendication 3, dans lequel au moins le matériau des disques d'anneau de court-circuit (7a, 7b) est chauffé au-dessus de la température de recristallisation, et l'emmanchement axial d'au moins un disque d'anneau de court-circuit (7) sur les barres conductrices (6) dépassant de la face frontale (15a, 15b) de l'empilage de tôles de rotor (5) est effectué en tenant compte d'une plage de température, d'un changement de forme et d'une vitesse de changement de forme, avec formage à chaud ultérieur ou simultané des disques d'anneau de court-circuit (7a, 7b) emmanchés axialement.
